# FASCICULE DE BREVET EUROPEEN

(11) **EP 1 669 154 B1**
(45) Date de publication et mention de la délivrance du brevet: **13.02.2008**
(21) Numéro de dépôt: 05292585.6
(22) Date de dépôt: 06.12.2005
(51) Int. Cl.: B23K 11/30

(54) **Installation de refroidissemnt d'une pince de soudage**
Einrichtung zum Kühlen einer Schweisszange
Spot welding gun cooling apparatus

(30) Priorité: 10.12.2004 FR 0413201
(43) Date de publication de la demande: 14.06.2006
(73) Titulaire: Cimlec Industrie, 78130 Les Mureaux (FR)
(72) Inventeur: Georgeault, Bernard, 22490 Trigavou (FR)
(74) Mandataire: Bertrand, Didier

(56) Documents cités:
- DE-A- 3 811 169
- FR-A- 2 077 666
- PATENT ABSTRACTS OF JAPAN vol. 2003, no. 12, 5 décembre 2003 (2003-12-05) & JP 2004 058163 A (INCS INC), 26 février 2004 (2004-02-26)

## Description

La présente invention se rapporte à une installation de refroidissement d'une pince de soudage, et notamment mais non exclusivement, les pinces de soudage destinées à équiper les robots de soudure de manière embarquée ou fixée au sol.

Les pinces de soudage comportent un corps et des bras montés mobiles en pivotement, l'un par rapport à l'autre sur ledit corps, lesdits bras présentant à leur extrémité respectivement une électrode montée dans un porte électrode. En outre, le corps de pince est équipé généralement d'un moteur électrique pour commander le déplacement relatif desdits bras et entraîner lesdites les électrodes l'une vers l'autre.

Lesdites électrodes, alimentées en courant électrique de forte puissance, viennent enserrer au moins deux portions de pièces à souder ensemble pour provoquer la fusion partielle des deux pièces et réaliser ainsi une soudure. Cette opération entraîne l'accumulation d'énergie thermique dans les électrodes de sorte qu'il est nécessaire de les refroidir pour éviter qu'elle ne se détériore trop rapidement.

Pour ce faire les porte-électrodes des deux bras de pince sont respectivement équipés d'un conduit de refroidissement qui présente une ouverture située au niveau du point de fixation des électrodes, l'ouverture étant obturée lorsque l'électrode est montée sur le porte-électrode. Un fluide caloporteur circule dans le conduit de refroidissement et s'écoule contre la portion d'électrode qui obture l'ouverture, de manière à évacuer l'énergie thermique qui s'accumule dans l'électrode durant les phases de soudure. DE 3 811 169 décrit un circuit de refroidissement.

Toutefois, ces électrodes doivent nécessairement être retirées périodiquement pour être rôdées ou changées par exemple, et lorsqu'elles sont retirées, bien que les conduites d'arrivée et d'évacuation en fluide caloporteur soient coupées, du fluide caloporteur s'écoule vers l'extérieur à travers l'ouverture du conduit de refroidissement. En conséquence, non seulement cette opération occasionne des pertes de fluide caloporteur mais au surplus, elle entraîne des projections de fluide qui causent des détériorations des matériels environnants par oxydation.

Un problème qui se pose alors et que vise à résoudre la présente invention est de fournir une installation qui permette d'éviter les fuites de fluide caloporteur et par conséquent les projections de fluide.

Dans ce but, la présente invention propose une installation de refroidissement d'une pince de soudage, ladite pince de soudage comprenant des bras de pince terminés par un porte-électrode, un conduit de refroidissement étant ménagé dans ledit porte-électrode, ledit conduit de refroidissement présentant une ouverture, ledit porte-électrode étant adapté à recevoir une électrode amovible qui recouvre ladite ouverture de façon sensiblement étanche, un fluide caloporteur étant destiné à circuler dans ledit conduit de refroidissement pour s'écouler contre une portion de paroi de ladite électrode et évacuer de l'énergie thermique accumulée dans ladite électrode, le conduit de refroidissement présentant une entrée et une sortie, ladite entrée étant raccordée à une conduite d'arrivée en fluide caloporteur et ladite sortie étant raccordée à une conduite d'évacuation en fluide caloporteur ; selon l'invention ladite installation comprend des moyens d'aspiration destinés à aspirer le liquide de refroidissement contenu dans ledit conduit de refroidissement lorsque ladite électrode est retirée dudit porte-électrode.

Ainsi, une caractéristique de l'invention réside dans le mode de coopération des moyens d'aspiration et du conduit de refroidissement de la pince qui permet d'extraire au moins une partie du fluide caloporteur contenu dans ce conduit de refroidissement des que l'on souhaite retirer l'électrode. De la sorte, lorsque l'électrode est retirée du porte-électrode, le conduit de refroidissement ne contenant plus de fluide caloporteur, aucun écoulement de ce fluide ne se produit. En conséquence, plus aucune fuite en fluide caloporteur n'apparaît lors du changement d'électrodes et par là-même, il n'est plus nécessaire de consacrer du temps aux opérations de nettoyage, ce qui permet d'augmenter le temps de travail de la pince de soudage.

Selon un mode de mise en oeuvre de l'invention particulièrement avantageux, lesdits moyens d'aspiration comprennent un cylindre et un piston d'aspiration monté à coulissement dans ledit cylindre, ledit cylindre présentant une extrémité raccordée audit conduit de refroidissement, et en ce que ledit piston d'aspiration est destiné à être entraîné dans un sens opposé à ladite extrémité pour aspirer ledit fluide caloporteur contenu dans ledit conduit de refroidissement. De la sorte, le piston d'aspiration adapté à coulisser dans le cylindre, permet de créer une dépression dans le conduit de refroidissement, laquelle dépression provoque l'entraînement du fluide caloporteur vers ledit cylindre et ainsi, lorsque l'électrode est retirée du porte-électrode, aucun ou peu de fluide caloporteur ne s'écoule à travers l'ouverture selon le type de pince.

Avantageusement, lesdits moyens d'aspiration comprennent un vérin d'actionnement, ledit vérin d'actionnement comprenant une tige solidaire dudit piston d'aspiration pour entraîner ledit piston d'aspiration et provoquer ainsi la dépression précitée dans le conduit de refroidissement. Par ailleurs, et selon un mode préféré de mise en oeuvre de l'invention, ledit vérin et ledit cylindre comportent un seul et même cylindre à deux chambres séparées par une cloison, l'une des chambres reliée audit conduit de refroidissement, présentant ledit piston d'aspiration, l'autre chambre comprenant un piston d'actionnement, ladite tige solidaire dudit piston d'actionnement, traversant ladite cloison de façon étanche et étant reliée audit piston d'aspiration.

Selon un autre mode préféré de mise en oeuvre les moyens d'aspiration comprennent deux vérins accolés dans le prolongement l'un de l'autre.

Ainsi, ce cylindre à double chambres étanches l'une par rapport à l'autre, malgré ladite tige qui traverse à coulissement ladite cloison, permet de concentrer en un seul corps à la fois les moyens d'aspiration et ledit vérin. De la sorte, en injectant un fluide dans la partie de chambre comprise entre ladite cloison étanche et ledit piston d'actionnement, ce dernier est entraîné en translation et par là-même entraîne ladite tige qui, solidaire du piston d'aspiration, accroît le volume d'une portion de chambre comprise entre le piston d'aspiration et le conduit de refroidissement, ce qui produit alors une dépression dans ce conduit de refroidissement.

De manière préférentielle, ledit vérin est un vérin pneumatique et par conséquent le fluide injecté est tout naturellement de l'air comprimé, lequel est très aisé à mettre en oeuvre.

En outre, et selon un mode de réalisation particulier de l'invention, lesdites conduites d'arrivée et d'évacuation en fluide caloporteur comprennent respectivement des vannes d'arrêt, et les vannes d'arrêt sont actionnées avant de retirer ladite électrode pour stopper la circulation du fluide caloporteur dans ledit conduit de refroidissement. De la sorte, la pression en fluide caloporteur dans le conduit de refroidissement entre les deux vannes d'arrêt est relativement faible, de sorte que la dépression provoquée par le déplacement du piston d'aspiration est d'autant plus marquée et que tout le fluide caloporteur initialement situé dans le conduit de refroidissement au voisinage de l'électrode et de l'ouverture qu'elle obture, est entraîné vers les moyens d'aspiration.

Au surplus, et de façon préférentielle lesdites vannes d'arrêt sont actionnées respectivement par des moyens pneumatiques. Ainsi, il est possible de relier ensemble ledit vérin pneumatique et lesdites vannes d'arrêt par un réseau d'alimentation en air comprimé commun, de façon que lesdites vannes d'arrêt soient actionnées en séquence avant l'actionnement dudit vérin pneumatique, pour couper d'abord ladite conduite d'arrivée, puis ladite conduite d'évacuation. Ainsi, en coupant d'abord ladite conduite d'arrivée en fluide caloporteur, la pression chute dans la conduite et par conséquent dans le conduit de refroidissement puis en coupant ensuite la conduite d'évacuation, le conduit de refroidissement est complètement isolé et demeure à une pression voisine de la pression de la conduite d'évacuation soit par exemple entre deux et trois bars. En actionnant alors le vérin pneumatique, la dépression créée par le piston d'aspiration est d'autant plus efficace.

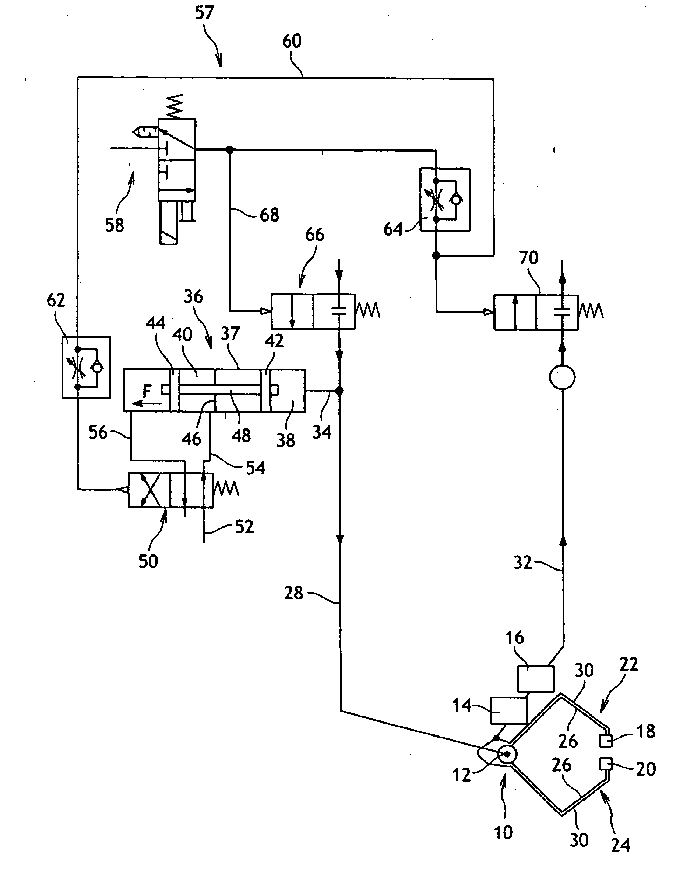

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- l'unique Figure est un schéma synoptique des différents éléments de l'invention et de leur mode de coopération.

L'unique Figure illustre de façon schématique une pince de soudage 10, laquelle pince présente un arbre d'articulation 12, un moteur électrique 14 et un transformateur 16. En outre, la pince de soudage 10 comporte deux bras non représentés terminés par des porte-électrodes 18, 20. Les porte-électrodes 18, 20 présentent des conduits de refroidissement 22, 24 qui longent les bras de la pince de soudage 10, et qui comportent respectivement, une partie amont d'entrée 26 raccordée à une conduite d'arrivée 28 en fluide caloporteur, et une partie aval de sortie 30 raccordée à une conduite d'évacuation 32 destinée à évacuer le fluide caloporteur. Ledit fluide caloporteur est un mélange aqueux contenant notamment des agents anticorrosions.

Lesdits porte-électrodes 18, 20 sont adaptés à recevoir des électrodes non représentées. Selon un mode de mise en oeuvre particulier, les électrodes creuses viennent coiffer les porte-électrodes étendues en saillie. Ces porte-électrodes présentent alors une ouverture formée de deux orifices qui débouchent à l'intérieur des électrodes, pour permettre la circulation du fluide caloporteur contre une portion de paroi interne des électrodes.

Bien évidemment, les électrodes joignent les ouvertures de façon étanche de façon que le fluide caloporteur ne puisse pas fuir et n'obturent pas les conduits de refroidissement. De la sorte, les électrodes qui sont susceptibles d'accumuler de l'énergie thermique durant les phases de soudure, ce qui pourrait les endommager, évacue cette énergie thermique grâce à la circulation du fluide caloporteur dans les conduits de refroidissement 22, 24.

Toutefois, lorsque les électrodes sont retirées de leur porte-électrode 18, ou 20, les ouvertures débouchent alors vers l'extérieur et le fluide caloporteur s'échappe à travers ces ouvertures. Une caractéristique essentielle de l'invention que l'on décrira ci-après consiste donc à purger les conduits de refroidissement 22, 24 avant de retirer les électrodes.

Pour ce faire, la conduite d'arrivée 28 en fluide caloporteur présente une dérivation 34 raccordée à un vérin à double chambres 36. Le vérin à double chambre 36 présente un cylindre 37 qui définit une première chambre d'aspiration 38 et une seconde chambre d'actionnement 40. Et il comporte, un piston d'aspiration 42 mobile en translation dans la chambre d'aspiration 38 et un piston d'actionnement 44, mobile en translation dans la chambre d'actionnement 40. En outre, le cylindre 37 présente une paroi étanche 46 séparant les deux chambres 38, 40, la paroi étanche 46 étant traversée par une tige 48 qui relie les deux pistons, 42 et 44. Bien évidemment, la tige 48 est mobile en translation à travers la paroi 46 sans perte d'étanchéité entre les deux chambres 38, 40.

La chambre d'actionnement 40 est adaptée à être alimentée en air comprimé entre la paroi étanche 46 et le piston d'actionnement 44 grâce à un distributeur pneumatique 50. Le distributeur pneumatique 50 est alimenté en air comprimé par un réseau 52 à une pression comprise, par exemple, entre sept et douze bars, et il est relié au vérin 36 par deux tubulures 54, 56. En outre, le distributeur pneumatique 50 est susceptible d'être commandé par le biais d'un équipement pneumatique 57 raccordé au réseau 52 et au moyen d'un distributeur pilote 58, lui-même adapté à être commandé manuellement ou électriquement au moyen d'un électroaimant.

En revanche, le distributeur pilote 58 est relié au distributeur pneumatique 50 au moyen d'un conduit d'alimentation 60 qui présente successivement, deux clapets de non-retour avec étranglement réglable, ou réducteurs, 62, 64 dont on expliquera la fonction dans la suite de la description.

Par ailleurs, la conduite d'arrivée 28 en fluide caloporteur présente une première vanne d'arrêt pneumatique 66 située en amont de la dérivation 34 et qui est relié directement, pour la commande, au distributeur pilote 58 au moyen d'un raccord 68. En outre, la conduite d'évacuation 32 présente elle, une seconde vanne d'arrêt pneumatique 70, raccordée pour la commande, au conduit d'alimentation 60 entre les deux clapets de non-retour 62, 64.

Les éléments structurels de l'installation de refroidissement conforme à l'invention étant maintenant définis, on décrira à présent le mode de fonctionnement de cette installation.

Avant qu'un ordre soit donné à la pince de soudage 10, de remplacer au moins l'une de ses électrodes, et ce par l'intermédiaire d'un séquenceur par exemple, le distributeur pilote 58 est activé. De la sorte, l'équipement pneumatique 57 est mis à la pression du réseau 52 et les vannes d'arrêt pneumatiques 66, 70 et le vérin à double chambres 36 sont activés séquentiellement ainsi que l'on va le décrire ci-après.

Avant que le distributeur pilote 58 ne soit activé, le fluide caloporteur s'écoule dans la conduite d'arrivée 28 puis traverse les conduits de refroidissement 22, 24 et est évacué par la conduite d'évacuation 32.

Dès que le distributeur pilote 58 est activé la première vanne d'arrêt pneumatique 66 est actionnée avant que la seconde vanne d'arrêt pneumatique 70 ne le soit car, la première reçoit de l'air comprimé provenant directement du distributeur pilote, sans perte de charge, tandis que la seconde reçoit l'air comprimé après le second réducteur 64 avec des pertes de charge. De la sorte, la conduite d'évacuation 32 est coupée avec retard par rapport à la conduite d'arrivée 28, ce qui permet de faire chuter considérablement la pression en fluide caloporteur dans les conduits de refroidissement 22, 24, d'une pression comprise entre quatre et six bars à une pression voisine de deux bars, avant de les isoler entre les deux vannes d'arrêt pneumatique 66, 70.

Ensuite, et encore avec retard par rapport à la seconde vanne d'arrêt pneumatique 70 et ce grâce au premier réducteur 62, le distributeur pneumatique 50 est commandé. De la sorte, la chambre d'actionnement 40 est mise à la pression d'air comprimé du réseau 52 et le piston d'actionnement 44 est entraîné dans un sens F opposé à la paroi étanche 46 et par là-même le piston d'aspiration 42 dans le même sens. Cela crée alors une dépression dans la première chambre d'aspiration 38 et partant, dans la conduite d'arrivée 28, en aval la de la vanne d'arrêt pneumatique 66 et par conséquent, qui se répercute dans les conduits de refroidissement 22, 24 et entraîne alors le fluide caloporteur qu'ils contiennent vers la première chambre d'aspiration 38.

Ainsi, le séquenceur précité peut alors commander l'extraction d'une électrode sans risque de fuite à travers les ouvertures des conduits de refroidissement 22, 24, puisque le fluide caloporteur qu'ils contenait a été évacué et entraîné vers la première chambre d'aspiration 38. De la sorte, le fluide caloporteur n'est nullement répandu à l'extérieur.

Ensuite, après que les électrodes aient été remontées sur les porte-électrodes 18, 20, les deux vannes d'arrêt pneumatique 66, 70 sont adaptés à être commandés en ouverture grâce aux distributeurs pilotes 58 pour autoriser à nouveau la circulation du fluide caloporteur à travers les conduits de refroidissement 22, 24 et parallèlement, le piston d'actionnement 44 est entraîné vers la paroi étanche 46 du vérin à double chambre 36 afin, d'une part de refouler le fluide caloporteur éventuellement contenu dans la première chambre d'aspirations 38 et d'autre part de réarmer le piston d'aspiration 42 pour créer une nouvelle dépression.

## Revendications

1. Installation de refroidissement d'une pince de soudage (10), ladite pince de soudage comprenant des bras de pince terminés par un porte-électrode (18, 20), un conduit de refroidissement (22, 24) étant ménagé dans ledit porte-électrode (18, 20), ledit conduit de refroidissement présentant une ouverture, ledit porte-électrode étant adapté à recevoir une électrode amovible qui recouvre ladite ouverture de façon étanche, un fluide caloporteur étant destiné à circuler dans ledit conduit de refroidissement (22, 24) pour s'écouler contre une portion de paroi de ladite électrode et évacuer de l'énergie thermique accumulée dans ladite électrode, le conduit de refroidissement présentant une entrée et une sortie, ladite entrée étant raccordée à une conduite d'arrivée (28) en fluide caloporteur et ladite sortie étant raccordée à une conduite d'évacuation (32) en fluide caloporteur ;
**caractérisée en ce qu**'elle comprend des moyens d'aspiration (36) destinés à aspirer le liquide de refroidissement contenu dans ledit conduit de refroidissement (22, 24) lorsque ladite électrode est retirée dudit porte-électrode (18, 20).

2. Installation de refroidissement selon la revendication 1, **caractérisée en ce que** lesdits moyens d'aspiration comprennent un cylindre (37) et un piston d'aspiration (42) monté à coulissement dans ledit cylindre (37), ledit cylindre présentant une extrémité raccordée audit conduit de refroidissement (22, 24), et **en ce que** ledit piston d'aspiration (42) est destiné à être entraîné dans un sens opposé à ladite extrémité pour aspirer ledit fluide caloporteur contenu dans ledit conduit de refroidissement (22, 24).

3. Installation de refroidissement selon la revendication 2, **caractérisée en ce que** lesdits moyens d'aspiration (36) comprennent un vérin d'actionnement, ledit vérin d'actionnement comprenant une tige (48) solidaire dudit piston d'aspiration (42) pour entraîner ledit piston d'aspiration.

4. Installation de refroidissement selon la revendication 3, **caractérisée en ce que** ledit vérin et ledit cylindre comportent un seul et même cylindre (37) à deux chambres séparées par une cloison étanche (46), l'une des chambres (38) reliée audit conduit de refroidissement (22, 24) présentant ledit piston d'aspiration (42), l'autre chambre (40) comprenant un piston d'actionnement (44), ladite tige (48) solidaire dudit piston d'actionnement (44), traversant ladite cloison étanche (46) de façon étanche et étant reliée audit piston d'aspjration (42).

5. Installation de refroidissement selon la revendication 3 ou 4, **caractérisée en ce que** ledit vérin est un vérin pneumatique.

6. Installation de refroidissement selon la revendication 3, **caractérisée en ce que** ledit vérin et ledit cylindre comportent deux vérins accolés, dans le prolongement l'un de l'autre.

7. Installation de refroidissement selon l'une quelconque des revendications 1 à 6, **caractérisée en ce que** lesdites conduites d'arrivée (28) et d'évacuation (32) en fluide caloporteur comprennent respectivement des vannes d'arrêt (66, 70) et **en ce que** les vannes d'arrêt sont actionnées avant de retirer ladite électrode pour stopper la circulation du fluide caloporteur dans ledit conduit de refroidissement (22, 24).

8. Installation de refroidissement selon la revendication 7, **caractérisée en ce que** lesdites vannes d'arrêt (66, 70) sont actionnées respectivement par des moyens pneumatiques.

9. Installation de refroidissement selon les revendications 5 et 8, **caractérisée en ce que** ledit vérin pneumatique (36) et lesdites vannes d'arrêt (66, 70) sont reliés ensemble par un réseau d'alimentation en air comprimé (52, 57), et **en ce que** lesdites vannes d'arrêt (66, 70) sont actionnées en séquence avant l'actionnement dudit vérin pneumatique (36), pour couper d'abord ladite conduite d'arrivée (28), puis ladite conduite d'évacuation (32).

## Claims

1. Cooling installation for a welding clamp (10), the said welding clamp comprising clamp arms terminating in an electrode holder (18, 20), a cooling duct (22, 24) being provided in the said electrode holder (18, 20), the said cooling duct having an orifice, the said electrode holder being adapted to receive a removable electrode which covers the said orifice in a sealed manner, a heat transfer fluid being intended to circulate in the said cooling duct (22, 24) in order to flow against a wall portion of the said electrode and to remove thermal energy which has built up in the said electrode, the cooling duct having an inlet and an outlet, the said inlet being connected to a supply duct (28) for heat transfer fluid and the said outlet being connected to an evacuation duct (32) for the heat transfer fluid;
**characterised in that** it has suction means (36) intended to withdraw the cooling liquid contained in the said cooling duct (22, 24) when the said electrode is removed from the said electrode holder (18, 20).

2. Cooling installation as claimed in claim 1, **characterised in that** the said suction means comprise a cylinder (37) and a suction piston (42) mounted in a sliding manner in the said cylinder (37), the said cylinder having one end connected to the said cooling duct (22, 24), and **in that** the said suction piston (42) is intended to be driven in a direction opposite to the said end in order to withdraw the said heat transfer fluid contained in the said cooling duct (22, 24).

3. Cooling installation as claimed in claim 2, **characterised in that** the said suction means (36) comprise an actuating jack, the said actuating jack comprising a rod (48) fixedly attached to the said suction piston (42) in order to drive the said suction piston.

4. Cooling installation as claimed in claim 3, **characterised in that** the said jack and the said cylinder comprise one and the same cylinder (37) with two chambers separated by a sealed wall (46), one of the chambers (38) connected to the said cooling duct (22, 24) containing the said suction piston (42), the other chamber (40) comprising an actuating piston (44), the said rod (48) fixedly attached to the said actuating piston (44) passing through the said sealed wall (46) in a sealed manner and being connected to the said suction piston (42).

5. Cooling installation as claimed in claim 3 or 4, **characterised in that** the said jack is a pneumatic jack.

6. Cooling installation as claimed in claim 3, **characterised in that** the said jack and the said cylinder comprise two jacks end to end, one as an extension of the other.

7. Cooling installation as claimed in any one of claims 1 to 6, **characterised in that** the said supply duct (28) and evacuation duct (32) for the heat transfer fluid respectively comprise shut-off valves (66, 70) and **in that** the shut-off valves are actuated before removing the said electrode in order to stop the circulation of the heat transfer fluid in the said cooling duct (22, 24).

8. Cooling installation as claimed in claim 7, **characterised in that** the said shut-off valves (66, 70) are actuated respectively by pneumatic means.

9. Cooling installation as claimed in claim 5 and 8, **characterised in that** the said pneumatic jack (36) and the said shut-off valves (66, 70) are connected together by a compressed air supply network (52, 57), and **in that** the said shut-off valves (66, 70) are actuated in sequence before actuating the said pneumatic jack (36) in order first to interrupt the said supply duct (28) then the said evacuation duct (32).

## Patentansprüche

1. Kühlanlage für eine Schweißklemme bzw. -zange (10), wobei die Zangen- bzw. Schweißklemme Zangen- bzw. Klemmenarme umfasst, die mit einem Elektrodenhalter bzw. -träger (18, 20) enden, wobei eine Kühlleitung (22, 24) in dem Elektrodenhalter (18, 20) vorgesehen bzw. ausgebildet ist, wobei die Kühlleitung eine Öffnung aufweist, wobei der Elektrodenhalter dazu vorgesehen ist, eine abnehmbare bzw. entfernbare Elektrode aufzunehmen, die die Öffnung dicht abdeckt, wobei ein wärmetragendes Fluid bzw. Kühlfluid dazu bestimmt ist, in der Kühlleitung (22, 24) zu zirkulieren, um gegen einen Wandabschnitt der Elektrode entlang- bzw. abzufließen und in der Elektrode angesammelte Wärmeenergie abzuleiten, wobei die Kühlleitung einen Eingang und einen Ausgang aufweist, wobei der Eingang an eine Zuleitung (28) für Kühlfluid und der Ausgang an eine Ableitung (32) für Kühlfluid angeschlossen sind;
**dadurch gekennzeichnet, dass** sie Ansaugmittel (36) umfasst, die dazu bestimmt sind, die in der Kühlleitung (22, 24) enthaltene Kühlflüssigkeit anzusaugen, wenn die Elektrode aus dem Elektrodenhalter (18, 20) gezogen wird.

2. Kühlanlage nach Anspruch 1, **dadurch gekennzeichnet, dass** die Ansaugmittel einen Zylinder (37) und einen Ansaugkolben (42), der gleitend im Zylinder (37) montiert ist, umfassen, wobei der Zylinder ein Ende aufweist, das an die Kühlleitung (22, 24) angeschlossen ist, und dass der Ansaugkolben (42) dazu bestimmt ist, in eine zum Ende entgegengesetzte Richtung angetrieben zu werden, um das in der Kühlleitung (22, 24) enthaltene Kühlfluid anzusaugen.

3. Kühlanlage nach Anspruch 2, **dadurch gekennzeichnet, dass** die Ansaugmittel (36) einen Betätigungszylinder umfassen, wobei der Betätigungszylinder eine Stange (48) umfasst, die mit dem Ansaugkolben (42) verbunden bzw. solidarisch ist, um den Ansaugkolben anzutreiben.

4. Kühlanlage nach Anspruch 3, **dadurch gekennzeichnet, dass** der Ansaugzylinder und der Zylinder einen einzigen und selben Zylinder (37) mit zwei durch eine dichte Trennwand bzw. Abschluß (46) getrennten Kammern umfassen, wobei eine der Kammern (38), die mit der Kühlleitung (22, 24) verbunden ist, den Ansaugkolben (42) aufweist, und die andere Kammer (40) einen Betätigungskolben (44) aufweist, wobei die mit dem Betätigungskolben (44) verbundene Stange (48) durch die dichte Trennwand (46) dicht hindurchgeht und mit dem Ansaugkolben (42) verbunden ist.

5. Kühlanlage nach Anspruch 3 oder 4, **dadurch gekennzeichnet, dass** der Zylinder ein pneumatischer Zylinder bzw. Druckluftzylinder ist.

6. Kühlanlage nach Anspruch 3, **dadurch gekennzeichnet, dass** der Ansaugzylinder und der Zylinder zwei in der Verlängerung zueinander und aneinander befestigte Zylinder umfassen.

7. Kühlanlage nach einem der Ansprüche 1 bis 6, **dadurch gekennzeichnet, dass** die Zuleitung (28) und die Ableitung (32) des Kühlfluids jeweils Halteventile (66, 70) umfassen, und dass die Halteventile betätigt werden, bevor die Elektrode herausgezogen bzw. entfernt wird, um die Zirkulation des Kühlfluids in der Kühlleitung (22, 24) zu stoppen.

8. Kühlanlage nach Anspruch 7, **dadurch gekennzeichnet, dass** die Halteventile (66, 70) jeweils durch pneumatische Mittel bzw. Druckluftmittel betätigt werden.

9. Kühlanlage nach den Ansprüchen 5 und 8, **dadurch gekennzeichnet, dass** der Druckluftzylinder (36) und die Halteventile (66, 70) durch ein Druckluftversorgungsnetz (52, 57) miteinander verbunden sind, und dass die Halteventile (66, 70) hintereinander vor der Betätigung des Druckluftzylinders (36) betätigt werden, um zuerst die Zuleitung (28) und dann die Ableitung (32) zu unterbrechen.
